# EUROPEAN PATENT APPLICATION

(11) **EP 2 572 910 A1**
(43) Date of publication of application: **27.03.2013**
(21) Application number: 11783216.2
(22) Date of filing: 25.04.2011
(51) Int. Cl.: B60H 1/22

(54) **VEHICLE HEATING AND COOLING DEVICE**

(30) Priority: 17.05.2010 JP 2010112840
(71) Applicant: TGK CO., Ltd., Tokyo 193-0942 (JP)
(72) Inventor: HIROTA, Hisatoshi, Hachioji-shi Tokyo 193-0942 (JP)
(74) Representative: Schröer, Gernot H.
(86) International application number: PCT/JP2011/002430
(87) International publication number: WO 2011/145277

(57) **Abstract**

An automotive air-conditioner 1 includes: a first refrigerant circulating passage in which a refrigerant, discharged from a compressor 2 during a cooling operation and a heating operation, can circulate so as to return to the compressor 2 after passing through an evaporator 7; a second refrigerant circulating passage in which the refrigerant, discharged from the compressor 2 during the heating operation, can circulate so as to return to the compressor 2 after passing through an outdoor heat exchanger 5; and a third refrigerant circulating passage in which the refrigerant, discharged from the compressor 2 during the cooling operation, can circulate so as to return to the compressor 2 after sequentially passing through the outdoor heat exchanger 5 and the evaporator 7. When the second refrigerant circulating passage is to be opened, a controller 100 regulates a ratio of a flow rate of the refrigerant flowing from the compressor 2 to the outdoor heat exchanger 5 to that of the refrigerant flowing from the compressor 2 to the evaporator 7 by controlling an opening degree of each of a first valve 41 and a second valve 42.

## Description

### Technical Field

The present invention relates to a heat pump type automotive air-conditioner by which a vehicle interior can be dehumidified and heated.

### Background Art

In a vehicle on which an internal-combustion engine is mounted, it becomes difficult recently to heat cooling water, which has been used as a heat source, to a temperature necessary for hating due to the improvement in the combustion efficiency of the engine, etc. On the other hand, in a hybrid vehicle on which an internal-combustion engine and an electric motor are used in combination, it is further difficult to use such cooling water, because the operation rate of the internal-combustion engine is low. On an electric car, a heat source itself created by an internal-combustion engine is not mounted at all. Accordingly, a heat pump type automotive air-conditioner by which a vehicle interior can be dehumidified and heated is presented, in which a cycle operation using a refrigerant is performed even in heating, not only in cooling (see, e.g., Patent Document 1).

Such an automotive air-conditioner has a refrigeration cycle including a compressor, outdoor heat exchanger, evaporator, indoor heat exchanger, etc., and the functions of the outdoor heat exchanger can be switched to each other between a heating operation and a cooling operation. During the heating operation, the outdoor heat exchanger functions as an evaporator. At the time, the indoor heat exchanger radiates heat while a refrigerant is circulating the refrigeration cycle, and the air in a vehicle interior is heated by the heat. On the other hand, during the cooling operation, the outdoor heat exchanger functions as a condenser. At the time, the refrigerant condensed in the outdoor heat exchanger evaporates in an evaporator, and the air in the vehicle interior is cooled by the latent heat of evaporation. At the time, dehumidification is also performed.

### Patent Document

[Patent Document 1] Japanese Patent Application Publication No. 1997-240266

### Disclosure of the Invention

### Problem to be Solved by the Invention

In such an automotive air-conditioner, however, if an amount of evaporation becomes larger than necessary, the evaporation occurring when the outdoor heat exchanger is made to function as an evaporator during the heating operation, there is the possibility that a situation in which a sufficient amount of a liquid refrigerant is not supplied to the evaporator in the vehicle interior may be caused. In that case, heat exchange in the evaporator is not substantially performed, and hence a function of dehumidifying the vehicle interior cannot be appropriately maintained, thereby causing the possibility that a problem, such as fogging of the window glass, may be created. Accordingly, the inventors have thought that, if an automotive air-conditioner can be regulated such that an appropriate amount of the liquid refrigerant is supplied to the evaporator in the vehicle interior when the outdoor heat exchanger is made to function as an evaporator, such a problem can be solved.

One of the purposes of the present invention is to provide an automotive air-conditioner by which a dehumidification performance can be sufficiently secured during a heating operation.

### Means for Solving the Problem

In order to solve the aforementioned problem, an automotive air-conditioner according to an embodiment of the present invention comprises: a compressor configured to compress and discharge a refrigerant; an outdoor heat exchanger that is disposed outside a vehicle interior, and that is configured to function as an outdoor condenser for radiating heat of the refrigerant during a cooling operation and is configured to function as an outdoor evaporator for evaporating the refrigerant during a heating operation; an indoor evaporator that is disposed in the vehicle interior and configured to evaporate the refrigerant; a first refrigerant circulating passage in which the refrigerant, discharged from the compressor during the cooling operation and the heating operation, can circulate so as to return to the compressor after passing through the indoor evaporator;
a second refrigerant circulating passage in which the refrigerant,
discharged from the compressor during the heating operation, can circulate so as to return to the compressor after passing through the outdoor heat exchanger; a third refrigerant circulating passage in which the refrigerant, discharged from the compressor during the cooling operation, can circulate so as to return to the compressor after sequentially passing through the outdoor heat exchanger and the indoor evaporator; a first valve that is provided in the first refrigerant circulating passage and an opening degree of the valve is controlled to regulate a flow rate of the refrigerant flowing from the compressor to the indoor evaporator; a second valve that is provided in the second refrigerant circulating passage and an opening degree of the valve is controlled to control a flow rate of the refrigerant flowing from the compressor to the outdoor heat exchanger; a third valve that is provided in the third refrigerant circulating passage and an opening degree of the valve is controlled to control a flow rate of the refrigerant flowing from the outdoor heat exchanger to the indoor evaporator; and a controller configured to drive-control each valve. When one of the second valve and the third valve is to be opened, the controller allows a flow of the refrigerant through one of the second refrigerant circulating passage and the third refrigerant circulating passage by closing the other valve; and when the second refrigerant circulating passage is to be opened, the controller regulates a ratio of the flow rate of the refrigerant flowing from the compressor to the outdoor heat exchanger to that of the refrigerant flowing from the compressor to the indoor evaporator by controlling the opening degree of each of the first valve and the second valve.

Herein, the each "valve" means a valve whose opening degree is regulated to a preset opening degree by the drive of the controller. The valve may be one whose opening degree is controlled by, for example, an actuator, such as a stepping motor. Alternatively, the valve may be one whose opening degree is controlled by an actuator, such as a solenoid, to a preset opening degree set by a supply current. The each valve may be a proportional valve whose opening degree is proportionally changed in accordance with a control command value. Alternatively, the each valve may be one whose opening degree becomes larger as a supply current becomes larger and becomes smaller as the supply current becomes smaller. Conversely, the each valve may be one whose opening degree becomes smaller as a supply current becomes larger and becomes larger as the supply current becomes smaller. In that case, the relationship between the supply current and the opening degree may correspond to each other linearly (in a linear function manner), alternatively may correspond to each other in a curved line manner (in a quadratic function manner). Alternatively, in the case where they correspond to each other in a linear function manner, there may be an inflection point, but it is preferable that they correspond to each other linearly. When the each valve is a "proportional valve", it is good that the opening degree tends to be changed in an approximately proportional manner in accordance with an amount of drive (e.g., the pulse number of a drive signal or a supply current, etc.). A proportional valve whose opening degree is changed in a slightly curved line manner or changed so as to have an inflection point may be used, but a proportional valve whose opening degree is linearly changed is preferable.

According to this embodiment, the opening degree of each of the first valve and second valve is controlled during the heating operation. Thereby, the ratio of the flow rate of the refrigerant flowing from the compressor to the outdoor heat exchanger (outdoor evaporator) to that of the refrigerant flowing from the compressor to the indoor evaporator can be regulated. That is, an amount of evaporation in each evaporator can be regulated. Accordingly, a flow rate of the refrigerant to be introduced into the indoor evaporator can be secured even during the heating operation by securing the amount of evaporation in the indoor evaporator, thereby allowing the function of dehumidifying the vehicle interior to be appropriately maintained.

In this embodiment, when one of the second valve and the third valve is to be opened, the other valve is closed, and hence the control is not performed in a state where the two valves are simultaneously opened. Accordingly, the second valve and third valve can be formed as a combination valve that can be driven by one actuator. With such a structure, the number of actuators can be reduced, thereby allowing cost reduction to be achieved.

### Advantage of the Invention

According to the present invention, an automotive air-conditioner can be provided, in which a dehumidification performance during a heating operation can be sufficiently secured.

### Brief Description of the Drawings

Fig. 1 is a system structure view illustrating a schematic structure of an automotive air-conditioner according to First Embodiment;
Figs. 2(A) to 2(D) are explanatory views each illustrating movements of the automotive air-conditioner;
Fig. 3 is a system structure view illustrating a schematic structure of an automotive air-conditioner according to Second Embodiment;
Figs. 4(A) to 4(D) are explanatory views each illustrating movements of the automotive air-conditioner;
Fig. 5 is a system structure view illustrating a schematic structure of an automotive air-conditioner according to Third Embodiment; and
Figs. 6(A) to 6(D) are explanatory views each illustrating movements of the automotive air-conditioner.

### Best Mode for Carrying out the Invention

Hereinafter, preferred embodiments according to the present invention will be described in detail with reference to the accompanying drawings.

### [First embodiment]

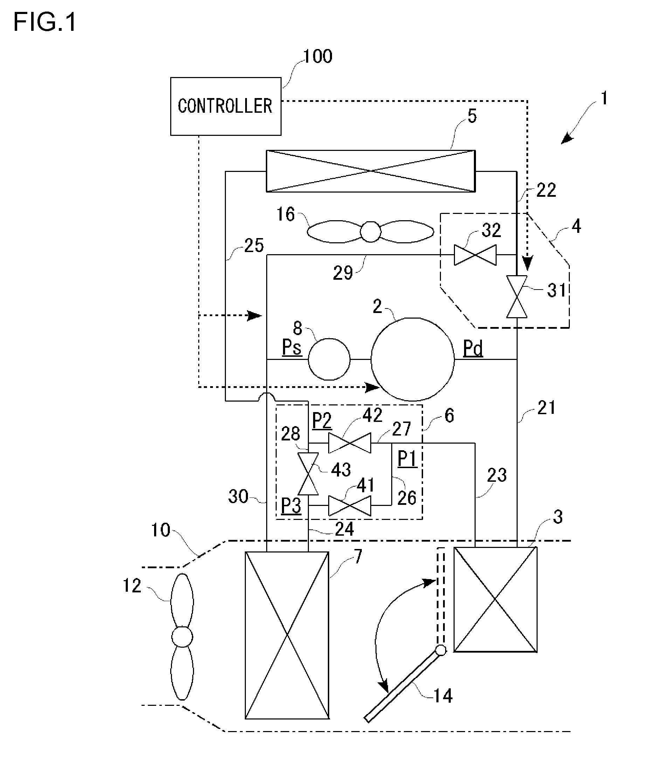

First Embodiment according to the present invention will be first described. Fig. 1 is a system structure view illustrating a schematic structure of an automotive air-conditioner according to First Embodiment. In the present embodiment, the automotive air-conditioner according to the invention is embodied as an air-conditioner for an electric car.

An automotive air-conditioner 1 comprises a refrigeration cycle (refrigerant circulating circuit) in which a compressor 2, an indoor condenser 3, a first control valve unit 4, an outdoor heat exchanger 5, a second control valve unit 6, an evaporator 7, and an accumulator 8 are connected by pipes. The automotive air-conditioner 1 is formed as a heat pump type air-conditioner by which air-conditioning of a vehicle interior is performed by using the heat of an alternative for chlorofluorocarbon (HFC-134a) as a refrigerant, during the course in which the alternative for chlorofluorocarbon circulates in the refrigeration cycle while changing the states thereof.

In addition, the automotive air-conditioner 1 is operated such that a plurality of refrigerant circulating passages are switched to each other between a cooing operation and a heating operation. This refrigeration cycle is formed such that the indoor condenser 3 and the outdoor heat exchanger 5 can be operated in parallel as a condenser, and also formed such that the evaporator 7 and the outdoor heat exchanger 5 can be operated in parallel as an evaporator. That is, a first refrigerant circulating passage in which the refrigerant circulates during a cooling operation and a heating operation, a second refrigerant circulating passage in which the refrigerant circulates only during a heating operation, and a third refrigerant circulating passage in which the refrigerant circulates only during a cooling operation, are formed. The first refrigerant circulating passage is one in which the refrigerant circulates in the order of the compressor 2, indoor condenser 3, evaporator 7, accumulator 8, and compressor 2. The second refrigerant circulating passage is one in which the refrigerant circulates in the order of the compressor 2, indoor condenser 3, outdoor heat exchanger 5, accumulator 8, and compressor 2. The third refrigerant circulating passage is one in which the refrigerant circulates in the order of the compressor 2, outdoor heat exchanger 5, evaporator 7, accumulator 8, and compressor 2. The flow of the refrigerant flowing through the outdoor heat exchanger 5, the flow occurring when the second refrigerant circulating passage is opened, is reversed to the flow thereof, occurring when the third refrigerant circulating passage is opened. That is, in the outdoor heat exchanger 5, an inlet port and an outlet port for the refrigerant, occurring when the second refrigerant circulating passage is opened, are respectively switched to an outlet port and an inlet port for the refrigerant, occurring when the third refrigerant circulating passage is opened.

Specifically, a passage leading to the discharge chamber in the compressor 2 branches into two passages, and a first passage 21, one of the two passages, leads to the inlet port of the indoor condenser 3 and a second passage 22, the other of the two passages, leads to one of the inlet/outlet ports of the outdoor heat exchanger 5. A third passage 23 leading to the outlet port of the indoor condenser 3 branches into two passages on the downstream side of the indoor condenser 3, and a main passage 26, one of the two passages, leads to the evaporator 7 via the a fourth passage 24 and a sub-passage 27, the other of the two passages, leads to the other of the inlet/outlet ports of the outdoor heat exchanger 5 via a fifth passage 25. The fourth passage 24 and the fifth passage 25 are connected to each other by a connecting passage 28. In addition, a bypass passage 29 branches in the middle of the second passage 22 and leads to the accumulator 8 and eventually to the compressor 2. Further, a return passage 30 leading to the outlet port of the evaporator 7 is connected to the bypass passage 29 on the downstream side of a second control valve 32 (which will be described later), and leads to the accumulator 8 and eventually to the compressor 2.

The first refrigerant circulating passage is formed by connecting the first passage 21, the third passage 23, the main passage 26, the fourth passage 24, and the return passage 30. The second refrigerant circulating passage is formed by connecting the first passage 21, the third passage 23, the sub-passage 27, the fifth passage 25, the second passage 22, and the bypass passage 29. The third refrigerant circulating passage is formed by connecting the second passage 22, the fifth passage 25, the connecting passage 28, the fourth passage 24, and the return passage 30. In order to achieve such switching of the refrigerant circulating passages, a first control valve unit 4 is provided in the connection portion between the compressor 2 and the outdoor heat exchanger 5 and a second control valve unit 6 is provided in the connection portion among the indoor condenser 3, the outdoor heat exchanger 5, and the evaporator 7.

The automotive air-conditioner 1 has a duct 10 in which air-to-air heat exchange is performed, and an indoor fan 12, the evaporator 7, and the indoor condenser 3 are arranged in this order from the upstream side in the flow direction of air in the duct 10. An air mix door 14 is rotatably provided on the upstream side of the indoor condenser 3 such that a ratio of an amount of the wind passing through the indoor condenser 3 to that of the wind bypassing the indoor condenser 3 is regulated. Further, an outdoor fan 16 is disposed so as to face the outdoor heat exchanger 5.

The compressor 2 is formed as an electrically-driven compressor for housing a motor and a compression mechanism in its housing. The compressor 2 is driven by a current supplied from a non-illustrated battery, and a discharge capacity of the refrigerant is changed in accordance with the number of revolutions of the motor. Compressors of various types, such as a reciprocating type, rotary type, and scroll type, can be adopted as the compressor 2, but the electrically-driven compressor is publicly-known itself, and hence the description thereof is omitted.

The indoor condenser 3 is provided in a vehicle interior and functions as an auxiliary condenser configured to radiate the heat of the refrigerant independently of the outdoor heat exchanger 5. That is, the heat of the refrigerant at high-temperature and high-pressure, discharged from the compressor 2, is radiated while the refrigerant is passing through the indoor condenser 3. The heat of the air distributed in accordance with the opening degree of the air mix door 14 is exchanged, while the air is passing through the indoor condenser 3.

The outdoor heat exchanger 5 is disposed outside the vehicle interior and functions as an outdoor condenser for radiating the heat of the refrigerant passing through the exchanger 5 during a cooling operation. On the other hand, the outdoor heat exchanger 5 functions as an outdoor evaporator for evaporating the refrigerant passing through the exchanger 5 during a heating operation. The outdoor fan 16 is a suction type fan in which open air is introduced by rotationally driving an axial fan by a motor. The outdoor heat exchanger 5 performs heat exchange between the open air and the refrigerant.

The evaporator 7 is disposed in the vehicle interior to function as an indoor evaporator for evaporating the refrigerant passing through the inside thereof. That is, the refrigerant whose temperature and pressure have both become low by passing through each of the control valves (which will be described later), the control valves forming the second control valve unit 6, evaporates while passing through the evaporator 7. The air introduced from the upstream side of the duct 10 is cooled by the latent heat of evaporation. At the time, the air that has been cooled and dehumidified is distributed, in accordance with the opening degree of the air mix door 14, into air passing through the indoor condenser 3 and air bypassing the indoor condenser 3. The air passing through the indoor condenser 3 is heated while passing through it. The air having passed through the indoor condenser 3 and the air having bypassed the condenser 3 are mixed together on the downstream side of the indoor condenser 3 to be regulated to have a target temperature, and supplied to the vehicle interior from a non-illustrated nozzle. The mixed air is blown out, for example, from a vent nozzle, foot nozzle, defroster nozzle, or the like, toward a predetermined place in the vehicle interior.

The accumulator 8 is a device in which the refrigerant sent out from the evaporator is stored after being subjected to gas-liquid separation, and has a liquid phase portion and a gas phase portion. Accordingly, if an expected amount or more of a liquid refrigerant is drawn out from the evaporator 7, the liquid refrigerant can be stored in the liquid phase portion and the refrigerant in the gas phase portion can be drawn out to the compressor 2. As a result, there is no trouble in the compression movements of the compressor 2. On the other hand, it is configured in the present embodiment that part of the refrigerant in the liquid phase portion can be supplied to the compressor 2, thereby allowing a necessary amount of lubricating oil to be returned to the compressor 2.

The first control valve unit 4 includes a first control valve 31 and the second control valve 32. The first control valve 31 has a valve portion for opening and closing the second passage 22 and a solenoid for driving the valve portion, so that an opening degree of the second passage 22 is regulated by opening and closing the valve portion in accordance with presence or absence of a supply current. In the present embodiment, an on-off valve that is opened or closed by presence or absence of power application is used as the first control valve 31. On the other hand, the second control valve 32 has a valve portion for opening and closing the bypass passage 29 and a solenoid for driving the valve portion, so that an opening degree of the bypass passage 29 is regulated by regulating an opening degree of the valve portion in accordance with a supply current. In the embodiment, an on-off valve that is opened or closed by presence or absence of power application is used as the second control valve 32.

In a variation, the second control valve 32 may be a differential pressure valve that is autonomously opened when a before and after pressure (differential pressure between the upstream pressure and the downstream pressure of the second control valve 32) exceeds a preset value (valve-opening differential pressure that is set in advance). Alternatively, the second control valve 32 may be a constant differential pressure valve whose valve portion is autonomously works such that the before and after pressure thereof becomes a constant value in accordance with a supply current. Alternatively, the second control valve 32 may be a proportional valve that works such that the opening degree of the valve portion becomes constant in accordance with drive force. In that case, the opening degree of the valve portion may be constant in accordance with a supply current. Alternatively, the second control valve 32 may be a flow rate control valve that controls the flow of a refrigerant so as to be constant in accordance with a supply current. Alternatively, the second control valve 32 may be a constant pressure valve that works such that the upstream pressure thereof becomes constant in accordance with a supply current. Alternatively, the second control valve 32 may be formed as a control valve ("evaporation-superheat control valve") that controls the flow of the refrigerant such that superheat in the outdoor heat exchanger 5 becomes constant in accordance with a supply current. Each of the first control valve 31 and the second control valve 32 may be an electromagnetic valve including a solenoid as an actuator, or may be a motor-operated valve including, as an actuator, an electric motor, such as a stepping motor.

The second control valve unit 6 includes a first proportional valve 41, a second proportional valve 42, and a third proportional valve 43. The first proportional valve 41 has a valve portion for opening and closing the main passage 26 and an actuator for driving the valve portion, so that the opening of the first refrigerant circulating passage is regulated by controlling an opening degree of the valve portion. The second proportional valve 42 has a valve portion for opening and closing the sub-passage 27 and an actuator for driving the valve portion, so that the opening degree of the second refrigerant circulating passage is regulated by controlling an opening degree of the valve portion. The third proportional valve 43 has a valve portion for opening and closing the connecting passage 28 and an actuator for driving the valve portion, so that the opening degree of the third refrigerant circulating passage is regulated by controlling an opening degree of the valve portion. In the present embodiment, the actuator in each proportional valve is composed of a stepping motor, but in a variation, an actuator composed of a solenoid may be adopted.

The automotive air-conditioner 1 formed as stated above is controlled by a controller 100. The controller 100 includes: a CPU for executing various arithmetic processing; a ROM for storing various control programs; a RAM to be used as a work area for storing data and executing programs; and an input/output interface, etc. Signals from non-illustrated various sensors and switches, which are installed in the automotive air-conditioner 1, are inputted to the controller 100. In order to achieve the room temperature set by an occupant in the vehicle, the controller 100 calculates an amount of control of each actuator to output a control signal to a drive circuit in each actuator. The controller 100 performs open and close control of each of the control valves (first control valve 31, second control valve 32) in the first control valve unit 4 and open and close control of each of the control valves (first proportional valve 41, second proportional valve 42, third proportional valve 43) in the second control valve unit 6, as well as drive control of the compressor 2, the indoor fan 12, the outdoor fan 16 and the air mix door 14.

Although the controller 100 has a drive signal output unit for outputting a preset pulse signal to the drive circuit in each of the control valves in the second control valve unit 6, a publicly-known drive signal output unit is adopted in the structure itself of the controller 100, and hence detailed description thereof will be omitted. The controller 100 determines a preset opening degree of each of the proportional valves based on predetermined external information detected by various sensors, such as the temperature inside and outside the vehicle interior, and the temperature of the air blown out from the evaporator 7, thereby allowing the stepping motor to be driven such that the opening degree of each of the proportional valves becomes the preset one. In a variation, when the actuator in each proportional valve is formed by a solenoid, a current is supplied such that the opening degree of each proportional valve becomes the preset one.

With such control, the compressor 2 introduces the refrigerant at suction pressure Ps via the suction chamber thereof, and compresses the refrigerant to discharge as the refrigerant at discharge pressure Pd, as illustrated. At the time, the pressure in the second control valve unit 6 becomes as illustrated. That is, the pressure on the upstream side of each of the first proportional valve 41 and the second proportional valve 42 becomes upstream pressure P1 at high-pressure, while the pressure on the downstream side of each of the first proportional valve 41 and the third proportional valve 43 becomes downstream pressure P3 at low-pressure. The pressure on the downstream side of the second proportional valve 42 and also on the upstream side of the third proportional valve 43 becomes intermediate pressure P2.

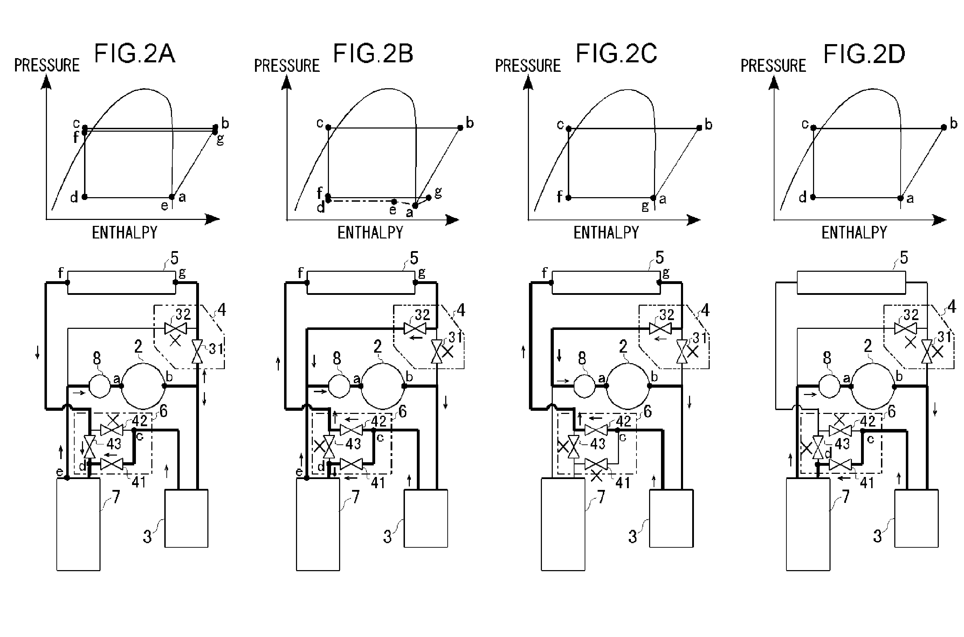

Subsequently, movements of the refrigeration cycle according to the present embodiment will be described. Figs. 2(A) to 2(D) are explanatory views each illustrating movements of the automotive air-conditioner, in which: 2(A) illustrates a state during a cooling operation; 2(B) illustrates a state during a heating operation; 2(C) illustrates a state during a specific heating operation; and 2(D) illustrates a state during a particular cooling and heating operation. The "cooling operation" described herein means an operation state in which a cooling function is exerted more greatly than a heating function; the cheating operation" means an operation state in which a heating function is exerted more greatly than a cooling function; the specific heating operation" means a heating operation in which the evaporator 7 is made not to function (a cooling function is not substantially exerted); and the ""particular cooling and heating operation" means a cooling operation and a heating operation in each of which the outdoor heat exchanger 5 is made not to function.

A Mollier diagram, by which the movements of the refrigeration cycle are explained, is illustrated in the upper portion of each view. The horizon axis represents enthalpy and the vertical axis represents various pressures. A state of movement of the refrigeration cycle is illustrated in the lower portion of each view. A heavy line and an arrow in the view represent a flow of the refrigerant, and symbols a to g correspond to those in the Mollier diagram. "X" in the view represents that a flow of the refrigerant is blocked. Although the lower portion in the view corresponds to Fig. 1, the structure in the view is simply illustrated for convenience, such as omission of illustration of the air mix door 14, etc.

During the cooling operation, in the first control valve unit 4, the first control valve 31 is opened and the second control valve 32 is closed, as illustrated in Fig. 2(A). On the other hand, in the second control valve unit 6, the first proportional valve 41 and the third proportional valve 43 are opened and the second proportional valve 42 is closed. At the time, the outdoor heat exchanger 5 functions as an outdoor condenser. That is, part of the refrigerant discharged from the compressor 2 returns to the compressor 2 after circulating the first refrigerant circulating passage so as to pass through the indoor condenser 3, first proportional valve 41, evaporator 7, and accumulator 8; while the other part thereof returns to the compressor 2 after circulating the third refrigerant circulating passage so as to pass through the first control valve 31, outdoor heat exchanger 5, third proportional valve 43, evaporator 7, and accumulator 8.

That is, the gas refrigerant at high-temperature and high-pressure, discharged from the compressor 2, is condensed with part of the gas refrigerant passing through the indoor condenser 3 and the other part thereof passing through the outdoor heat exchanger 5. Thereafter, the refrigerant having passed through the indoor condenser 3 is subjected to adiabatic expansion in the first proportional valve 41, and introduced into the evaporator 7 after being converted into a gas-liquid two phase refrigerant at low-temperature and low-pressure. The refrigerant having passed through the outdoor heat exchanger 5 is subjected to adiabatic expansion in the third proportional valve 43, and introduced into the evaporator 7 after being converted into a gas-liquid two phase refrigerant at low-temperature and low-pressure. The refrigerant evaporates while passing through the evaporator 7 and cools the air in the vehicle interior. At the time, the refrigerant drawn out from the evaporator 7 is introduced into the compressor 2 after passing through the accumulator 8, and at the time, the lubricating oil is returned to the compressor 2.

On the other hand, during the heating operation, in the first control valve unit 4, the first control valve 31 is closed and the second control valve 32 is opened, as illustrated in Fig. 2(B). On the other hand, in the second control valve unit 6, the first proportional valve 41 and the second proportional valve 42 are opened and the third proportional valve 43 is closed. At the time, the outdoor heat exchanger 5 functions as an outdoor evaporator. That is, part of the refrigerant discharged from the compressor 2 returns to the compressor 2 after circulating the first refrigerant circulating passage so as to pass through the indoor condenser 3, first proportional valve 41, evaporator 7, and accumulator 8; while the other part thereof returns to the compressor 2 after circulating the second refrigerant circulating passage so as to pass through the indoor condenser 3, second proportional valve 42, outdoor heat exchanger 5, second control valve 32, and accumulator 8.

That is, the gas refrigerant at high-temperature and high-pressure, discharged from the compressor 2, is condensed by passing through the indoor condenser 3. A gas-liquid two phase refrigerant at low-temperature and low-pressure, which has been subjected to adiabatic expansion in the first proportional valve 41, evaporates in the evaporator 7. On the other hand, a gas-liquid two phase refrigerant at low-temperature and low-pressure, which has been subjected to adiabatic expansion in the second proportional valve 42, evaporates in the outdoor heat exchanger 5. At the time, a ratio of amounts of evaporation in both the evaporators of the outdoor heat exchanger 5 and the evaporator 7 is controlled by the preset opening degree of each of the first proportional valve 41 and the second proportional valve 42. Thereby, the amount of evaporation in the evaporator 7 can be secured and a dehumidification function can be secured. Further, the lubricating oil can be returned to the compressor 2 without retention in the evaporator 7.

It is required to perform a dehumidifying operation well in this heating operation, and outline of the dehumidification control is as follows. That is, as illustrated in Fig. 2(B), a state of the refrigerant at the inlet port of the compressor 2 is always maintained on a saturated vapor pressure curve by the accumulator 8 (a Point). On the other hand, a state of the refrigerant at the outlet port of the evaporator 7 (e Point) is changed so as to balance that at the outlet port of the outdoor heat exchanger 5 (g Point). That is, the humidity wetness of the refrigerant at the outlet port of the evaporator 7 balances the superheat of the refrigerant at the outlet port of the outdoor heat exchanger 5. Accordingly, the humidity wetness in the evaporator 7 can be secured and the dehumidification performance can be maintained by regulating the opening degree of each of the first proportional valve 41 and the second proportional valve 42 such that the superheat at the outlet port of the outdoor heat exchanger 5 becomes appropriate.

The controller 100 calculates the superheat from, for example, the temperature at the outlet port of the outdoor heat exchanger 5 to regulate the opening degree of each of the first proportional valve 41 and the second proportional valve 42 such that the superheat becomes appropriate. In the present embodiment, an example has been described, in which superheat is created in the outdoor heat exchanger 5; however, when an operation mode in which superheat is to be created in the evaporator 7 is present, the superheat is calculated conversely from the temperature at the outlet port of the evaporator 7 to regulate the opening degree of each of the first proportional valve 41 and the second proportional valve 42 such that the superheat becomes appropriate, thereby allowing the humidity wetness in the outdoor heat exchanger 5 to be regulated.

During the specific heating operation, in the first control valve unit 4, the second control valve 32 is opened and the first control valve 31 is closed, as illustrated in Fig. 2(C). On the other hand, in the second control valve unit 6, the second proportional valve 42 is opened and the first proportional valve 41 and the third proportional valve 43 are closed. Accordingly, the refrigerant does not pass through the evaporator 7, and hence the evaporator 7 is made not to substantially function. That is, the outdoor heat exchanger 5 only functions as an evaporator. That is, the refrigerant discharged from the compressor 2 returns to the compressor 2 after circulating the second refrigerant circulating passage so as to pass through the indoor condenser 3, second proportional valve 42, outdoor heat exchanger 5, second control valve 32, and accumulator 8.

That is, the gas refrigerant at high-temperature and high-pressure, discharged from the compressor 2, is condensed by passing through the indoor condenser 3; and is converted into a gas-liquid two phase refrigerant at low-temperature and low-pressure by being subjected to adiabatic expansion in the second proportional valve 42; and is evaporated by passing through the outdoor heat exchanger 5. The refrigerant having passed through the outdoor heat exchanger 5 returns to the compressor 2 after passing through the accumulator 8. That is, the heat of the refrigerant at low-temperature and low-pressure is not exchanged in the evaporator 7, and hence the air introduced into the vehicle interior is only heated by the indoor condenser 3. Thus, because the liquid refrigerant at low-temperature and low-pressure is not temporarily supplied to the evaporator 7, the evaporator 7 is warmed by the air passing through the duct 10. When determining, in accordance with the outer temperature, etc., that the outer environment is at extremely low-temperature, the controller 100 prevents or suppresses the evaporator 7 from freezing by appropriately switching from the heating operation to the specific heating operation.3

During the particular cooling and heating operation, in the first control valve unit 4, the first control valve 31 and the second control valve 32 are closed, as illustrated in Fig. 2(D). On the other hand, in the second control valve unit 6, the first proportional valve 41 is opened and the second proportional valve 42 and the third proportional valve 43 are closed. Accordingly, the refrigerant does not pass through the outdoor heat exchanger 5, and hence the outdoor heat exchanger 5 is made not to substantially function. That is, a state of internal air circulation is created, in which the evaporator 7 only functions as an evaporator. That is, the refrigerant discharged from the compressor 2 returns to the compressor 2 after circulating the first refrigerant circulating passage so as to pass through the indoor condenser 3, first proportional valve 41, evaporator 7, and accumulator 8.

That is, the gas refrigerant at high-temperature and high-pressure, discharged from the compressor 2, is condensed by passing through the indoor condenser 3; and is converted into a gas-liquid two phase refrigerant by being subjected to adiabatic expansion in the first proportional valve 41; and is evaporated by passing through the evaporator 7. The refrigerant having passed through the evaporator 7 returns to the compressor 2 after passing through the accumulator 8. The air introduced into the vehicle interior is cooled and dehumidified by passing through the evaporator 7, and the temperature of the air is regulated by heating with the indoor condenser 3. Such particular cooling and heating operation effectively functions when endotherm from outside is difficult, e.g., when a vehicle is placed in an extremely cold situation.

### [Second Embodiment]

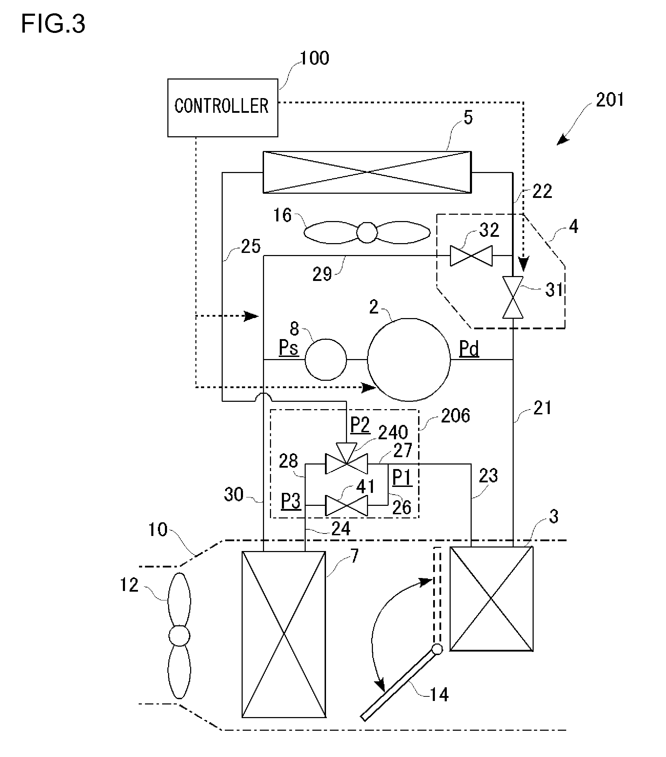

Subsequently, Second Embodiment according to the present invention will be described. An automotive air-conditioner according to the present embodiment is the same as in First Embodiment, except that the structure of a second control valve unit is different. Accordingly, structures similar to those in First Embodiment will be denoted with the same reference numerals and the description thereof will be appropriately omitted. Fig. 3 is a system structure view illustrating a schematic structure of an automotive air-conditioner according to Second Embodiment.

An automotive air-conditioner 201 comprises, in the same way as in First Embodiment, a refrigeration cycle in which the compressor 2, the indoor condenser 3, the first control valve unit 4, the outdoor heat exchanger 5, a second control valve unit 206, the evaporator 7, and the accumulator 8 are connected by pipes.

The second control valve unit 206 includes the first proportional valve 41 and a second proportional valve 240. The second proportional valve 240 is formed as a combination valve having a function obtaining by combining the second proportional valve 42 and the third proportional valve 43 in First Embodiment. That is, the second proportional valve 240 includes a first valve portion for opening and closing the sub-passage 27, a second valve portion for opening and closing the connecting passage 28, and a common actuator for driving the first valve portion and the second valve portion. However, when one of the first valve portion and the second valve portion is opened, the other is closed, and hence the first valve portion and the second valve portion are not simultaneously subjected to linear control. In other words, because the two valve portions are not simultaneously subjected to linear control, they can be drive-controlled by one actuator. In the present embodiment, the actuator in the second proportional valve 240 is composed of a stepping motor, but in a variation, an actuator composed of a solenoid may be adopted.

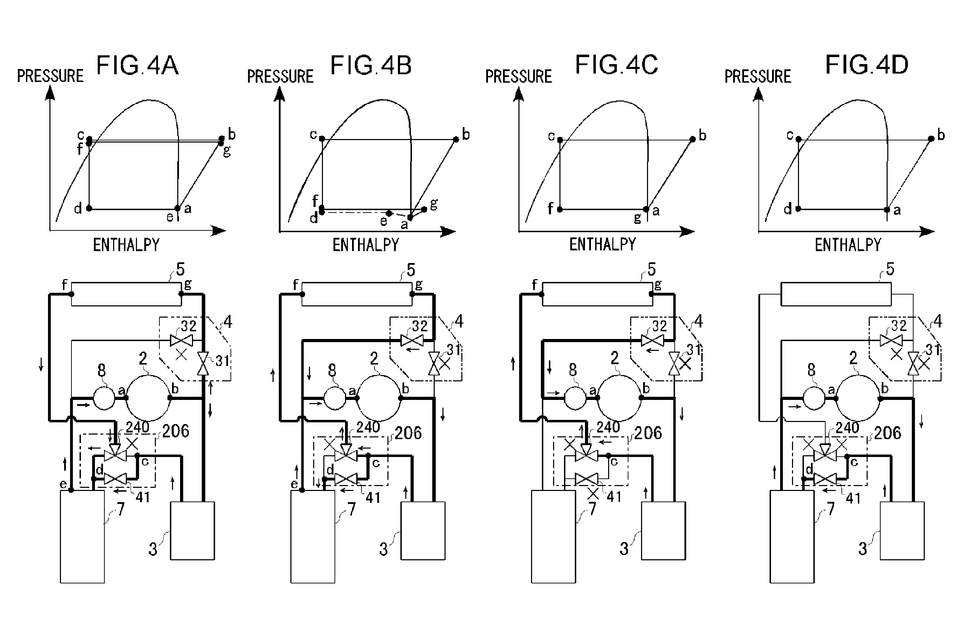

Subsequently, movements of the refrigeration cycle according to the present embodiment will be described. Figs. 4(A) to 4(D) are explanatory views each illustrating movements of the automotive air-conditioner, in which: 4(A) illustrates a state during a cooling operation; 4(B) illustrates a state during a heating operation; 4(C) illustrates a state during a specific heating operation; and 4(D) illustrates a state during a particular cooling and heating operation. A Mollier diagram is illustrated in the upper portion of each view, while a state of movement of the refrigeration cycle is illustrated in the lower portion of each view. Symbols a to g correspond to those in the Mollier diagram.

During the cooling operation, in the second control valve unit 206, the first proportional valve 41 is opened, as illustrated in Fig. 4(A). In addition, in the second proportional valve 240, the first valve portion is closed and the second valve portion is opened. At the time, the outdoor heat exchanger 5 functions as an outdoor condenser. As a result, part of the refrigerant discharged from the compressor 2 circulates the first refrigerant circulating passage and the other part thereof circulates the third refrigerant circulating passage. That is, the gas refrigerant at high-temperature and high-pressure, discharged from the compressor 2, is condensed with part of the refrigerant passing through the indoor condenser 3 and the other part thereof passing through the outdoor heat exchanger 5. Thereafter, the refrigerant having passed through the indoor condenser 3 is subjected to adiabatic expansion in the first proportional valve 41, and introduced into the evaporator 7 after being converted into a gas-liquid two phase refrigerant at low-temperature and low-pressure. The refrigerant having passed through the outdoor heat exchanger 5 is subjected to adiabatic expansion by passing through the second valve portion in the second proportional valve 240, and introduced into the evaporator 7 after being converted into a gas-liquid two phase refrigerant at low-temperature and low-pressure. The refrigerant evaporates while passing through the evaporator 7 and cools the air in the vehicle interior.

On the other hand, during the heating operation, in the second control valve unit 206, the first proportional valve 41 is opened, as illustrated in Fig. 4(B). In addition, in the second proportional valve 204, the first valve portion is opened and the second valve portion is closed. At the time, the outdoor heat exchanger 5 functions as an outdoor evaporator. As a result, part of the refrigerant discharged from the compressor 2 circulates the first refrigerant circulating passage, while the other part thereof circulates the second refrigerant circulating passage. That is, the gas refrigerant at high-temperature and high-pressure, discharged from the compressor 2, is condensed after passing through the indoor condenser 2. A gas-liquid two phase refrigerant at low-temperature and low-pressure, which has been subjected to adiabatic expansion in the first proportional valve 41, evaporates in the evaporator 7. On the other hand, a gas-liquid two phase refrigerant at low-temperature and low-pressure, which has been subjected to adiabatic expansion by passing through the first valve portion in the second proportional valve 240, evaporates in the outdoor heat exchanger 5. At the time, the ratio of amounts of evaporation in both the evaporators of the outdoor heat exchanger 5 and the evaporator 7 is controlled by the preset opening degree of each of the first proportional valve 41 and the second proportional valve 42. Thereby, the amount of evaporation in the evaporator 7 can be secured and a dehumidification function can be secured. The dehumidification control is the same as described in First Embodiment.

During the specific heating operation, in the second control valve unit 206, the first proportional valve 41 is closed, as illustrated in Fig. 4(C). In addition, in the second proportional valve 240, the first valve portion is opened and the second valve portion is closed. Accordingly, the refrigerant does not pass through the evaporator 7, and hence the evaporator 7 is made not to substantially function. That is, the gas refrigerant at high-temperature and high-pressure, discharged from the compressor 2, is condensed by passing through the indoor condenser 3; and is converted into a gas-liquid two phase refrigerant at low-temperature and low-pressure by being subjected to adiabatic expansion while passing through the first valve portion in the second proportional valve 240; and is evaporated by passing through the outdoor heat exchanger 5. The refrigerant having passed through the outdoor heat exchanger 5 returns to the compressor 2 after passing through the accumulator 8. That is, because the liquid refrigerant at low-temperature and low-pressure is not temporarily supplied to the evaporator 7, the evaporator 7 is warmed by the air passing through the duct 10. Accordingly, even if the outer environment is at extremely low-temperature, freezing of the evaporator 7 can be prevented or suppressed.

During the particular cooling and heating operation, in the second control valve unit 206, the first control valve 41 is opened, as illustrated in Fig. 4(D). In addition, the first valve portion and the second valve portion in the second proportional valve 240 are both closed. Accordingly, the refrigerant does not pass through the outdoor heat exchanger 5, and hence the outdoor heat exchanger 5 is made not to substantially function. That is, the evaporator 7 only functions as an evaporator. That is, the gas refrigerant at high-temperature and high-pressure, discharged from the compressor 2, is condensed by passing through the indoor condenser 3; and is converted into a gas-liquid two phase refrigerant at low-temperature and low-pressure by being subjected to adiabatic expansion in the first proportional valve 41; and is evaporated by passing through the evaporator 7. The refrigerant having passed through the evaporator 7 returns to the compressor 2 after passing through the accumulator 8.

In the present embodiment, the second proportional valve for regulating the opening degree of the second refrigerant circulating passage and the third proportional valve for regulating the opening degree of the third refrigerant circulating passage are formed as the second proportional valve 240 (combination valve) that can be driven by one actuator, as stated above. With such a structure, the number of actuators can be reduced, thereby allowing cost reduction to be achieved.

### [Third Embodiment]

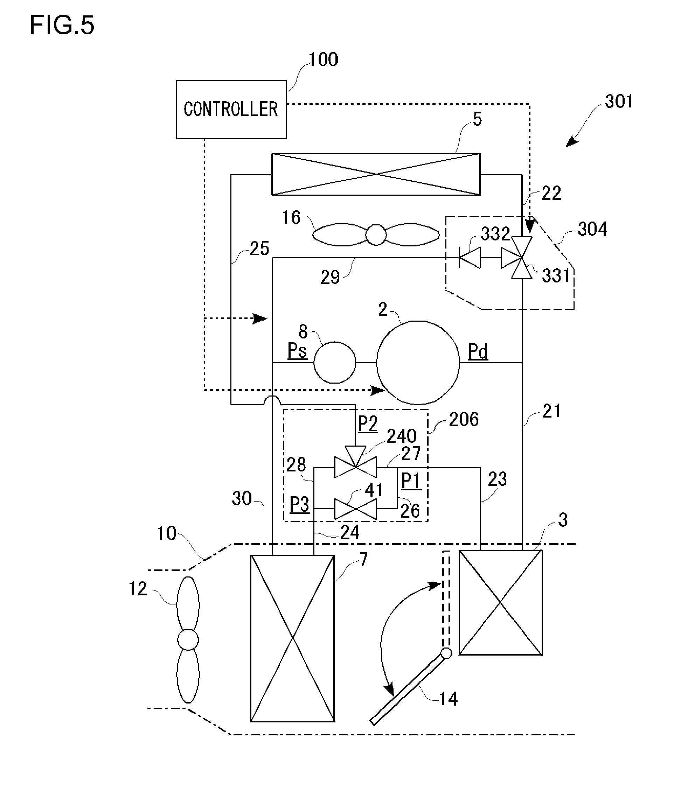

Subsequently, Third Embodiment according to the present invention will be described. An automotive air-conditioner according to the present embodiment is the same as in Second Embodiment, except that the structure of a first control valve unit is different. Accordingly, structures similar to those in Second Embodiment will be denoted with the same reference numerals and the description thereof will be appropriately omitted. Fig. 5 is a system structure view illustrating a schematic structure of an automotive air-conditioner according to Third Embodiment.

An automotive air-conditioner 301 comprises, in the same way as in First Embodiment, a refrigeration cycle in which the compressor 2, the indoor condenser 3, a first control valve unit 304, the outdoor heat exchanger 5, the second control valve unit 206, the evaporator 7, and the accumulator 8 are connected by pipes.

The first control valve unit 304 includes a control valve 331 and a check valve 332. The control valve 331 is composed of a so-called three-way valve and arranged at the branch point with the bypass passage 29 in the second passage 22. The control valve 331 includes both a first valve portion for opening and closing a passage connecting the discharge chamber in the compressor 2 and the inlet/outlet port of the outdoor heat exchanger 5, and a second valve portion connecting the inlet/outlet port of the outdoor heat exchanger 5 and the suction chamber in the compressor 2. The control valve 331 is an on-off valve for opening or closing the valve portions in accordance with presence or absence of a supply current, and closes one of the first valve portion and the second valve portion when opening the other of the two portions. The check valve 332 is provided in the bypass passage 29 and prevents a reverse flow of the refrigerant. Alternatively, the check valve 332 may be one that is biased to the valve-closing direction by, for example, a spring, etc., and that is opened when the before and after differential pressure thereof becomes larger than a predetermined valve-opening differential pressure.

In a variation, the second valve portion may be any one of the aforementioned differential pressure valve, constant differential pressure valve, proportional valve, flow rate control valve, constant pressure valve, and evaporation-superheat control valve. In addition, the control valve 331 is an electromagnetic valve including a solenoid as an actuator, but in a variation, it may be a motor-operated valve including, as an actuator, an electric motor, such as a stepping motor.

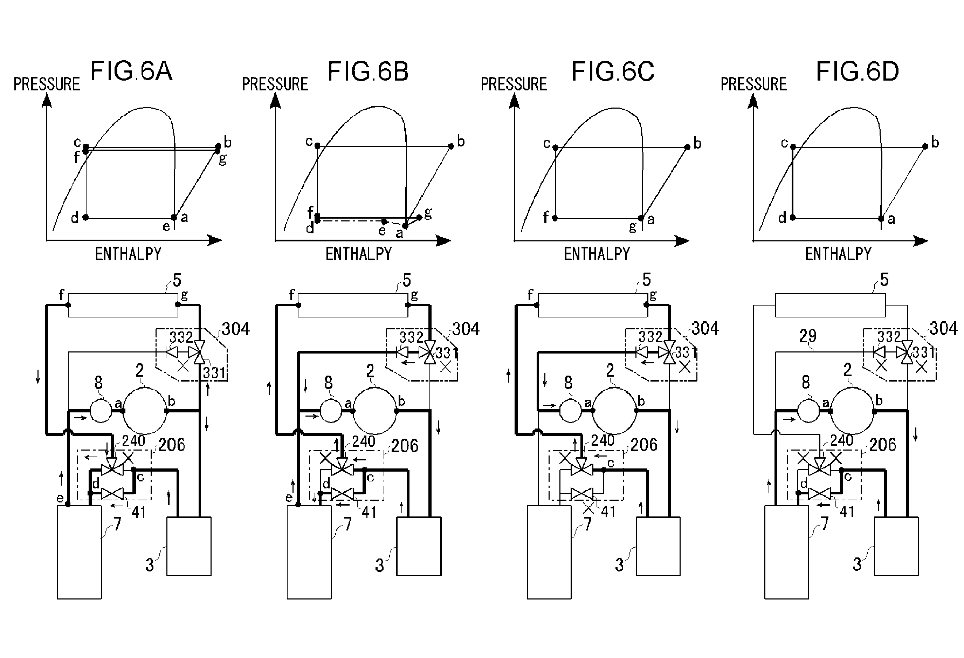

Subsequently, movements of the refrigeration cycle according to the present embodiment will be described. Figs. 6(A) to 6(D) are explanatory views each illustrating movements of the automotive air-conditioner, in which: 6(A) illustrates a state during a cooling operation; 6(B) illustrates a state during a heating operation; 6(C) illustrates a state during a specific heating operation; and 6(D) illustrates a state during a particular cooling and heating operation. A Mollier diagram is illustrated in the upper portion of each view, while a state of movement of the refrigeration cycle is illustrated in the lower portion of each view. Symbols a to g correspond to those in the Mollier diagram.

During the cooling operation, in the first control valve unit 304, the first valve portion in the control valve 331 is opened and the second valve portion is closed, as illustrated in Fig. 6(A). On the other hand, during the heating operation and the specific heating operation, the first valve portion in the control valve 331 is closed and the second valve portion is opened, as illustrated in Figs. 6(B) and 6(C). In addition, during the particular cooling and heating operation, both the first valve portion and the second valve portion in the control valve 331 are closed, as illustrated in Fig. 6(D). The movements and operations of the second control valve unit 206, including the movements during a dehumidifying operation, are the same as in Second Embodiment, and hence the description thereof will be omitted. With such a structure, operations similar to those in Second Embodiment can also be performed in the refrigeration cycle according to the present embodiment.

The preferred embodiments of the present invention have been described above, but the invention should not be limited to these specific embodiments. It is needless to say that various modifications may be made within the scope of the technical idea of the invention.

In each of the aforementioned embodiments, an example has been described, in which the automotive air-conditioner according to the present invention has been applied to an electric car, but it is needless to say that the automotive air-conditioner can be applied to a car on which an internal-combustion engine is mounted and a hybrid car on which an internal-combustion engine and an electric motor are both mounted. In each of the aforementioned embodiments, an example has been described, in which a motor compressor is adopted as the compressor 2, but a variable displacement compressor whose capacity can be varied by using the rotation of an engine can also be adopted.

In each of the aforementioned embodiments, an example has been described, in which multiple valves each having a function of proportional valve are mounted as the second control unit. In a variation, a flow rate of the refrigerant, flowing per unit time, may be changed by replacing at least one of the proportional valves that form the second control vale unit with an on-off valve and by changing the switching frequency of the valve.

### Reference Numerals

- 1: Automotive Air-Conditioner
- 2: Compressor
- 3: Indoor Condenser
- 4: First Control Valve Unit
- 5: Outdoor Heat Exchanger
- 6: Second Control Valve Unit
- 7: Evaporator
- 8: Accumulator
- 31: First Control Valve
- 32: Second Control Valve
- 41: First Proportional Valve
- 42: Second Proportional Valve
- 43: Third Proportional Valve
- 100: Controller
- 201: Automotive Air-Conditioner
- 206: Second Control Valve Unit
- 240: Second Proportional Valve
- 301: Automotive Air-Conditioner
- 304: First Control Valve Unit
- 331: Control Valve
- 332: Check valve

## Claims

1. An automotive air-conditioner comprising:
a compressor configured to compress and discharge a refrigerant;
an outdoor heat exchanger that is disposed outside a vehicle interior, and
that is configured to function as an outdoor condenser for radiating heat of the refrigerant during a cooling operation and is configured to function as an outdoor evaporator for evaporating the refrigerant during a heating operation;
an indoor evaporator that is disposed in the vehicle interior and configured to evaporate the refrigerant;
a first refrigerant circulating passage in which the refrigerant, discharged from the compressor during the cooling operation and the heating operation, can circulate so as to return to the compressor after passing through the indoor evaporator;
a second refrigerant circulating passage in which the refrigerant, discharged from the compressor during the heating operation, can circulate so as to return to the compressor after passing through the outdoor heat exchanger;
a third refrigerant circulating passage in which the refrigerant, discharged from the compressor during the cooling operation, can circulate so as to return to the compressor after sequentially passing through the outdoor heat exchanger and the indoor evaporator;
a first valve that is provided in the first refrigerant circulating passage and an opening degree of the valve is controlled to regulate a flow rate of the refrigerant flowing from the compressor to the indoor evaporator;
a second valve that is provided in the second refrigerant circulating passage and an opening degree of the valve is controlled to control a flow rate of the refrigerant flowing from the compressor to the outdoor heat exchanger;
a third valve that is provided in the third refrigerant circulating passage and an opening degree of the valve is controlled to control a flow rate of the refrigerant flowing from the outdoor heat exchanger to the indoor evaporator; and
a controller configured to drive-control each valve, wherein when one of the second valve and the third valve is to be opened, the controller allows a flow of the refrigerant through one of the second refrigerant circulating passage and the third refrigerant circulating passage by closing the other valve; and when the second refrigerant circulating passage is to be opened, the controller regulates a ratio of the flow rate of the refrigerant flowing from the compressor to the outdoor heat exchanger to that of the refrigerant flowing from the compressor to the indoor evaporator by controlling the opening degree of each of the first valve and the second valve.

2. The automotive air-conditioner according to claim 1, wherein
the first valve is composed of a first proportional valve; the second valve is composed of a second proportional valve; and the third valve is composed of a third proportional valve.

3. The automotive air-conditioner according to claim 1 or claim 2, wherein the second valve and the third valve are formed as a combination valve that can be driven by one actuator.

4. The automotive air-conditioner according to any one of claims 1 to 3, wherein
a control valve is provided at a position located, during the heating operation, on the downstream side of the outdoor heat exchanger in the second refrigerant circulating passage, the valve regulating the flow rate of the refrigerant to be returned to the compressor from the outdoor heat exchanger.

5. The automotive air-conditioner according to any one of claims 1 to 4 further comprising, between a branch point of the first refrigerant circulating passage and the second refrigerant circulating passage and the compressor, an auxiliary condenser configured to radiate the heat of the refrigerant independently of the outdoor heat exchanger, wherein the first refrigerant circulating passage is provided such that the refrigerant, discharged from the compressor during the cooling operation and the heating operation, can circulate so as to return to the compressor after sequentially passing through the auxiliary condenser and the indoor evaporator, and wherein
the second refrigerant circulating passage is provided such that the refrigerant, discharged from the compressor during the heating operation, can circulate so as to return to the compressor after sequentially passing through the auxiliary condenser and the outdoor heat exchanger, and wherein
the heat discharged by the auxiliary condenser is used for heating the air having passed through the indoor evaporator.
